# DEMANDE DE BREVET EUROPEEN

(11) **EP 1 422 955 A1**
(43) Date de publication de la demande: **26.05.2004**
(21) Numéro de dépôt: 03292819.4
(22) Date de dépôt: 13.11.2003
(51) Int. Cl.: H04Q 7/22

(54) **Procédé de transmission de données à rentabilité d'exécution améliorée**

(30) Priorité: 19.11.2002 FR 0214609
(71) Demandeur: FRANCE TELECOM SA, 75015 Paris (FR)
(72) Inventeur: Samou, Jean-Claude, 77600 Bussy Saint Georges (FR); Breton, Guillaume, 92130 Issy Les Moulineaux (FR); Le Therisien, Philippe, 75116 Paris (FR)
(74) Mandataire: Saint-Marc, Christophe Andréas

(57) **Abrégé**

La présente invention concerne un procédé de transmission de données destinées à former une chaîne de caractères, incluant :
. une étape de traduction TRS desdits caractères en données binaires TBD, et
. une étape de transmission TRANS desdites données binaires.

Selon l'invention, les données binaires TBD incluent des mots binaires BWi de moins de sept bits, chaque mot binaire étant destiné à définir un caractère.

L'invention permet, en réduisant la taille individuelle de chaque caractère sous sa forme codée, d'augmenter le nombre maximal de caractères qu'un message d'une taille donnée peut contenir, en comparaison avec un message de taille égale conforme par exemple à un format imposé par la norme GSM 03.38.

## Description

La présente invention concerne un procédé de transmission de données destinées à former une chaîne de caractères, incluant :
. une étape de traduction desdits caractères en données binaires, et
. une étape de transmission desdites données binaires.

Un tel procédé est couramment mis en oeuvre dans des systèmes de télécommunication conformes à une norme GSM 03.38 pour offrir à des utilisateurs de radiotéléphones un service d'échange de courts messages écrits, connu de l'homme du métier sous l'abréviation SMS de l'expression anglo-saxonne "Short Message Service".

Des messages écrits conformes à la norme GSM 03.38 présentent une taille maximale de 1120 bits, soit 160 caractères, lorsque lesdits caractères sont traduits en mots binaires présentant une taille de sept bits, appelés septets, ou 140 caractères, lorsque lesdits caractères sont traduits en mots binaires présentant une taille de huit bits, appelés octets.

Une traduction d'un caractère en un septet ou en un octet est réalisée en utilisant une table alphabétique prédéterminée qui, à chaque caractère possible fait correspondre une et une seule valeur binaire possible dudit septet ou dudit octet. Ainsi, une traduction en septets permet d'utiliser 2⁷=128 caractères différents pour composer un message, une traduction en octets permettant d'utiliser 2⁸=256 caractères différents.

Or, il ressort de nombreuses études de comportement d'usagers de services d'échange de courts messages écrits qu'une très grande majorité de ces usagers, non seulement n'utilise que très rarement les grandes variétés de caractères offertes par des traductions en septets ou en octets, mais a de surcroît développé une syntaxe codée permettant de réduire le nombre de caractères nécessaires à l'expression de mots ou de phrases entières. Cette syntaxe codée est le plus souvent à base phonétique, utilisant des lettres majuscules ou des chiffres pouvant être prononcés isolément lors d'une lecture du message ainsi codé, et des lettres minuscules pour constituer des sonorités non représentées par les lettres majuscules ou chiffres. Ainsi, pour un utilisateur francophone d'une telle syntaxe codée, un message "RV o Kfé 2 Flor" signifiera "Rendez-vous au Café de Flore", et pour un utilisateur anglo-saxon d'une telle syntaxe "YRUhere?" signifiera "Why are you here?".

Il ressort de ces études de comportement que les usagers de services d'échange de courts messages écrits n'utilisent pas toute la diversité de caractères offerte à eux par le procédé de transmission de données connu, et cherchent au contraire à augmenter la teneur en information de chaque message en comprimant les données qu'il contient au moyen de syntaxes codées telles celle décrite ci-dessus.

L'utilisation d'une telle syntaxe codée est en outre révélatrice d'un désir de confidentialité et de personnalisation des messages échangés par les utilisateurs, désir qui est satisfait dans une certaine mesure par l'assurance qu'une personne non-initiée à la syntaxe codée ne pourra pas appréhender la pleine signification d'un message qui l'exploite. Il s'agit là d'un cryptage très primitif, qui n'a pas vocation à être inviolable mais témoigne pourtant d'une certaine personnalisation d'un message par son auteur, qui pourra ainsi espérer briller auprès d'un lecteur de ce message par une interprétation astucieuse de la syntaxe codée qui aura permis une rédaction originale du message. De telles considérations sont très importantes pour certains usagers, en particulier pour les adolescents.

L'un des buts de l'invention est donc d'augmenter le nombre de caractères qu'un message peut inclure, sans pour autant augmenter le nombre total de bits nécessaires à la traduction dudit message, de manière à augmenter la richesse des informations potentiellement transmissibles au moyen d'un procédé conforme à l'invention.

Un autre but de l'invention est d'offrir à des utilisateurs d'un tel procédé une protection de la confidentialité des informations ainsi transmises plus efficace que la protection offerte par l'utilisation de syntaxes codées telles celles décrites plus haut, ainsi qu'un plus haut degré de personnalisation des messages transmis par ces utilisateurs.

En effet, un procédé de transmission conforme au paragraphe introductif est caractérisé selon l'invention en ce que les données binaires incluent des mots binaires de moins de sept bits, chaque mot binaire étant destiné à définir un caractère.

L'invention permet, en réduisant la taille individuelle de chaque caractère sous sa forme codée, d'augmenter le nombre maximal de caractères qu'un message d'une taille donnée peut contenir, en comparaison avec un message de taille égale conforme à un format imposé par la norme GSM 03.38.

L'invention exploite le constat évoqué précédemment selon lequel la diversité de caractères offerte par les tables alphabétiques prédéterminées par la norme GSM 03.38 n'est pas utilisée pas les usagers de services d'échanges de courts messages écrits. L'invention, en limitant à six bits la taille maximale de chaque mot binaire définissant un caractère, permet de réduire de 1/7, soit de plus de 14%, la taille d'un message dont les caractères seraient codés sur six bits par rapport à la taille d'un message identique dont les caractères seraient codés sur sept bits, tout en offrant 2⁶=64 caractères différents, c'est-à-dire par exemple les vingt-six lettres de l'alphabet, en minuscules et majuscules, les dix chiffres du système décimal et deux caractères spéciaux, ou encore les vingt-six lettres de l'alphabet en majuscules ou en minuscules, les dix chiffres du système décimal et vingt-huit caractères spéciaux.

Les caractères pourront également être codés sur quatre ou cinq bits. Un mode de réalisation particulièrement avantageux de l'invention décrit dans la suite de l'exposé autorisera un codage de 62 caractères différents au moyen de quintets choisis dans deux tables alphabétiques différentes.

Par ailleurs, l'étape de traduction des caractères en données binaires sera exécutée au moyen d'une ou plusieurs tables alphabétiques différentes de celles prévues par la norme GSM 03.38, tables dont le contenu ne sera alors en principe pas public et aura pu être élaboré par l'auteur du message, ce qui confère une plus grande confidentialité et un plus haut degré de personnalisation aux données transmises au moyen d'un procédé conforme à l'invention.

Selon une première variante de l'invention, un procédé tel que décrit ci-dessus inclut en outre, insérées entre l'étape de traduction et l'étape de transmission :
. une étape de concaténation desdits mots binaires en une chaîne de valeurs binaires, et
. une étape de mise en forme de ladite chaîne en une chaîne d'octets contenant les données binaires à transmettre.

Les étapes de concaténation et de mise en forme permettent de transformer la chaîne de mots binaires de taille inférieure à sept bits en une chaîne d'octets qui est alors transmissible au moyen d'un dispositif émetteur conforme à la norme GSM 03.38, ce qui permet d'utiliser un matériel préexistant et largement répandu pour mettre en oeuvre du procédé de transmission selon l'invention.

Selon une deuxième variante de l'invention, qui peut être mise en oeuvre alternativement ou cumulativement avec la première variante décrite ci-dessus, l'étape de traduction met en oeuvre au moins une table alphabétique prédéterminée identifiable au moyen d'au moins une valeur codée, ledit procédé incluant en outre, insérées entre l'étape de traduction et l'étape de transmission :
. une étape de création, au sein des données binaires à transmettre, d'au moins un champ d'identification de table, et
. une étape d'inscription, dans ledit champ d'identification de table, de ladite valeur codée.

Ainsi qu'exposé plus haut, l'étape de traduction sera exécutée en référence à une ou plusieurs tables qui ne sont pas normalisées, puisque les caractères sont destinés à être traduits en mots binaires ayant une taille différente de celle prévue dans la norme GSM 03.38. Le champ d'identification de table permettra donc de communiquer à un dispositif récepteur des données binaires un identifiant de la table à utiliser pour opérer une traduction inverse desdites données binaires en caractères intelligibles pour un utilisateur du dispositif récepteur.

Tous les caractères d'un même message peuvent avoir été traduits en mots binaires au moyen d'une unique table alphabétique, auquel cas il suffira d'adjoindre à la traduction binaire dudit message un seul champ d'identification de table.

Ce champ d'identification de table pourra par exemple être créé au sein d'un en-tête spécifique au message formé par les données binaires et disposé en amont de celles-ci. Le champ d'identification de table pourra par exemple comporter deux octets permettant alors de définir 2¹⁶=65536 tables alphabétiques différentes, ce qui est énorme. On pourra par conséquent choisir de n'utiliser pour former les valeurs codées que des caractères alphanumériques, qui offrent 36 possibilités par octet ce qui permettra à deux octets formant un champ d'identification de table tel celui décrit ci-dessus de définir sans ambiguïté 36²=1296 tables alphabétiques différentes.

Il est néanmoins tout à fait envisageable d'utiliser des tables alphabétiques différentes pour traduire différents caractères, auquel cas chaque mot binaire résultant d'une telle traduction sera avantageusement accompagné d'un champ d'identification de table contenant la valeur codée associée à la table alphabétique qui aura été utilisée pour obtenir ce mot binaire.

Ainsi, dans un mode de mise en oeuvre particulier de l'invention, un procédé tel que décrit plus haut pourra inclure en outre une étape d'adjonction d'un identifiant de table à chaque mot binaire, chaque identifiant de table étant destiné à contenir une valeur codée identifiant une table alphabétique en référence à laquelle la traduction dont résulte ledit mot binaire a été exécutée.

Selon une variante avantageuse d'un tel procédé, une exécution de l'étape d'adjonction est destinée à être inhibée lorsqu'un mot binaire donné auquel l'identifiant de table doit être adjoint a été traduit en référence à la même table alphabétique que celle en référence à laquelle la traduction dont résulte un mot binaire précédent ledit mot binaire donné a été exécutée.

Cette variante permet de réduire encore la longueur de chaînes de données binaires transmises au moyen du procédé conforme à l'invention.

Dans un autre mode de mise en oeuvre particulier de l'invention, l'étape de traduction met en oeuvre au moins deux tables alphabétiques prédéterminées, chaque table comprenant au moins un caractère dit de renvoi qui, lorsqu'il sera disposé devant un mot binaire résultant de la traduction d'un caractère donné, signifiera qu'au moins ledit caractère aura été traduit en référence à une table alphabétique différente de celle qui aura été utilisée pour traduire un caractère précédent ledit caractère donné.

Dans un mode de mise en oeuvre avantageux de l'invention, les mots binaires sont formés par des quintets, chaque table alphabétique étant alors destinée à contenir trente-deux caractères.

Un tel mode de mise en oeuvre est avantageux en ce qu'il permet de coder chaque mot binaire résultant de l'exécution de l'étape de traduction sur cinq bits seulement, c'est-à-dire sous forme de quintets, tout en offrant 62 significations possibles de chacun de ces quintets au lieu de 2⁵=32. En effet, le caractère de renvoi inclus dans chacune des tables permettra de sélectionner l'une ou l'autre de ces tables pour exécuter la traduction d'un ou plusieurs caractères placés à la suite du caractère de renvoi, et une répartition judicieuse des caractères dans les tables alphabétiques en fonction de la nature de chaque caractère permettra d'utiliser à plusieurs reprises un même table alphabétique pour la traduction de plusieurs caractères successifs. Une telle répartition judicieuse pourra par exemple consister à inscrire toutes les lettres et des signes de ponctuation élémentaires dans l'une des tables alphabétiques, et tous les chiffres et divers symboles mathématiques dans l'autre table alphabétique.

Dans d'autres modes de mise en oeuvre de l'invention, dans lesquels les données à transmettre pourront être traduites en sextets, quintets ou quartets, chaque table alphabétique pourra inclure K caractères de renvoi à K autres tables alphabétiques, où K est un entier supérieur ou égale à un, et offrir par conséquent une plus grande diversité dans le choix de caractères transmissibles grâce à l'invention. Une telle diversité renforcera la confidentialité des données ainsi transmises, mais rendra en contrepartie plus complexe la gestion des tables alphabétiques à utiliser lors de l'exécution d'une étape de traduction. En outre, plus la valeur de K sera grande, moins la chaîne de données binaires résultant de l'étape de traduction sera compressée, puisqu'elle contiendra un nombre important de caractères de renvoi. On choisira en pratique une valeur de K inférieure à trois ou quatre, sauf dans des applications où la confidentialité des données est une contrainte prépondérante.

Dans un autre mode de mise en oeuvre particulier de l'invention, un procédé tel que décrit plus haut inclut en outre, insérée avant l'étape de traduction des caractères en données binaires, une étape de transformation d'au moins une table alphabétique destinée à être mise en oeuvre lors de l'exécution de l'étape de traduction.

Un tel mode de mise en oeuvre est avantageux en ce qu'il permet un cryptage supplémentaire des données transmises, puisqu'un récepteur desdites données devra lui aussi exécuter une étape de transformation de chaque table alphabétique qui aura été transformée par l'émetteur de ces données avant exécution de l'étape de traduction. Le récepteur devra à cet effet avoir été informé de la nature exacte de la transformation qui aura été appliquée à chaque table alphabétique, sans quoi l'exécution de l'étape de traduction par le récepteur ne pourra produire la chaîne de caractères d'origine.

Selon l'un de ses aspects matériels, l'invention concerne également un système de télécommunication incluant au moins un dispositif émetteur de données destinées à former une chaîne de caractères et au moins un dispositif récepteur de telles données, le dispositif émetteur incluant :
. des moyens de traduction desdits caractères en données binaires, et
. des moyens de transmission desdites données binaires,
. système caractérisé en ce que les moyens de traduction sont agencés de sorte que les données binaires incluent des mots binaires de moins de sept bits, chaque mot binaire étant destiné à définir un caractère.

Selon un autre de ses aspects matériels, l'invention concerne également un système de télécommunication tel que décrit ci-dessus, caractérisé en ce que le dispositif émetteur inclut en outre :
. des moyens de concaténation desdits mots binaires en une chaîne de valeurs binaires, et
. des moyens de mise en forme de ladite chaîne en une chaîne d'octets contenant les données binaires à transmettre.

Selon encore un autre de ses aspects matériels, l'invention concerne également un système de télécommunication tel que décrit plus haut, caractérisé en ce que les moyens de traduction mettent en oeuvre au moins une table alphabétique prédéterminée identifiable au moyen d'au moins une valeur codée, et en ce que le dispositif émetteur inclut en outre :
. des moyens de création, au sein des données binaires à transmettre, d'au moins un champ d'identification de table, et
. des moyens d'inscription, dans ledit champ d'identification de table, de ladite valeur codée.

Dans un mode de réalisation particulier de cet aspect matériel de l'invention, un système de télécommunication tel que décrit ci-dessus inclut en outre des moyens d'adjonction d'un identifiant de table à chaque mot binaire, chaque identifiant de table étant destiné à contenir une valeur codée identifiant une table alphabétique en référence à laquelle la traduction dont résulte ledit mot binaire a été exécutée.

Dans une variante de ce mode de réalisation particulier, les moyens d'adjonction sont destinés à être inhibés lorsqu'un mot binaire donné auquel l'identifiant de table doit être adjoint a été traduit en référence à la même table alphabétique que celle en référence à laquelle la traduction dont résulte un mot binaire précédent ledit mot binaire donné a été exécutée.

Dans un autre mode de réalisation particulier d'un système de télécommunication tel que décrit plus haut, les moyens de traduction pourront mettre en oeuvre au moins deux tables alphabétiques, préalablement mémorisées sur un support mémoire accessible par le dispositif émetteur, chaque table étant identifiable au moyen d'une valeur codée sur un bit destinée à être inscrite dans un champ d'identification de table adjoint à un quintet formant un mot binaire résultant de la traduction d'un caractère en référence à la table considérée.

Dans un mode de réalisation avantageux d'un tel système de télécommunication, les mots binaires sont formés par des quintets, chaque table alphabétique étant alors destinée à contenir trente-deux caractères.

Dans un autre mode de réalisation particulier d'un système de télécommunication tel que décrit plus haut, les moyens de traduction pourront mettre en oeuvre quatre tables alphabétiques, préalablement mémorisées sur un support mémoire accessible par le dispositif émetteur, contenant chacune seize caractères, chaque table étant identifiable au moyen d'une valeur codée sur deux bits destinée à être inscrite dans un champ d'identification de table adjoint à un quartet formant un mot binaire résultant de la traduction d'un caractère en référence à la table considérée.

Les supports mémoire prévus dans ces modes de mise en oeuvre particuliers de l'invention pourront être des mémoires internes au dispositif émetteur, mais pourront être également des éléments amovibles comme des cartes à puces ou des bâtonnets mémoire de type "Memory Stick". Les tables alphabétiques contenues dans ces supports mémoire pourront avoir été préalablement définies et inscrites sur lesdits supports par un opérateur de télécommunication auprès duquel un utilisateur du dispositif émetteur aura souscrit un abonnement à un service d'échanges de courts messages écrits de type SMS, mais pourront également avoir été définies et inscrites par l'utilisateur lui-même, ce qui permettra audit utilisateur de s'assurer d'une plus grande confidentialité et d'un plus haut degré de personnalisation de messages traduits en référence à de telles tables alphabétiques, puisque leur contenu ne sera connu que de l'utilisateur et des interlocuteurs qu'il aura choisis.

Dans un autre mode de mise en oeuvre particulier d'un système de télécommunication tel que décrit plus haut, le dispositif récepteur sera muni de moyens d'identification d'une table alphabétique prédéterminée identifiable au moyen d'une valeur codée et d'un support mémoire accessible par ledit dispositif récepteur et destiné à contenir ladite table, ledit dispositif récepteur incluant en outre :
. des moyens de détection d'absence de ladite table du support mémoire, et
. des moyens d'émission vers le dispositif émetteur d'une requête de transmission d'une table dont l'absence aura été détectée par les moyens de détection.

Ce mode de mise en oeuvre permet à un dispositif récepteur, qui ne connaît pas une table alphabétique nécessaire à la traduction des données binaires en un message intelligible pour un utilisateur du dispositif récepteur, de requérir auprès du dispositif émetteur desdites données binaires une transmission de ladite table. Ceci permettra d'assurer qu'un message traduit au moyen d'une ou plusieurs tables alphabétiques non-publiques puisse être lu par un destinataire dudit message, sans pour autant entraîner une trop grande dissémination du contenu de telles tables, puisqu'elles pourront n'être divulguées que de manière sélective, et uniquement sur demande expresse du destinataire.

L'invention concerne également, en tant que moyen essentiel pour sa mise en oeuvre matérielle, un dispositif émetteur inclus dans un système de télécommunication tel que décrit plus haut.

L'invention concerne également, en tant qu'autre moyen essentiel pour sa mise en oeuvre matérielle, un dispositif récepteur inclus dans un système de télécommunication tel que décrit plus haut.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est un diagramme qui représente un procédé conforme à un mode de mise en oeuvre particulier de l'invention,
La Fig.2 est un diagramme qui représente un procédé conforme à un autre mode de mise en oeuvre particulier de l'invention,
La Fig.3 est un diagramme qui représente un procédé conforme à un autre mode de mise en oeuvre particulier de l'invention,
La Fig.4 est un diagramme qui représente des tables alphabétiques mises en oeuvre dans un tel procédé, et
La Fig.5 est un schéma fonctionnel qui représente un système de télécommunication dans lequel l'invention est mise en oeuvre.

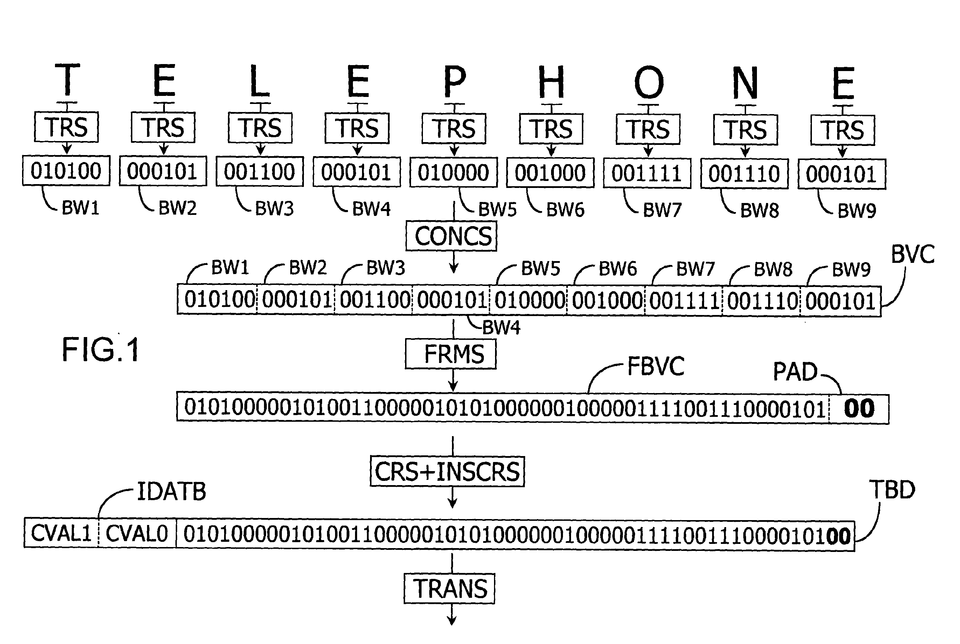

La Fig.1 illustre comment un court message écrit composé ici de neuf caractères "TELEPHONE" est transmis au moyen d'un procédé de transmission de données conforme à l'invention. Ce procédé inclut :
. une étape de traduction TRS desdits caractères en données binaires, et
. une étape de transmission TRANS desdites données binaires,

Conformément à l'invention, les données binaires incluent des mots binaires BWi (pour i=1 à 9) de moins de sept bits, chaque mot binaire BWi étant destiné à définir un caractère. Chaque mot binaire BWi est dans cet exemple formé par un sextet constitué de six bits, de sorte que l'ensemble du message constitué par la chaîne de neuf caractères "TELEPHONE" est codée sur 54 bits, alors que 63 bits auraient été nécessaires pour coder cette chaîne de caractères sous forme de septets conformément à un procédé connu conforme à la norme GSM 03.38. L'invention permet donc dans cet exemple une réduction d'au moins 1/7, soit de plus de 14%, de la taille du message codé sous forme binaire, ce qui permet de réduire l'ensemble des coûts de transmission dans une proportion sensiblement équivalente, au bénéfice à la fois des usagers d'un service d'échange de messages mettant en oeuvre l'invention, et d'un opérateur d'un tel service. Par rapport à un procédé selon lequel les caractères sont codés sous forme d'octets, l'invention permettra une réduction voisine de 25% de ces coûts de transmission.

Dans ce mode de mise en oeuvre particulier de l'invention, le procédé de transmission de données inclut en outre, insérées entre l'étape de traduction TRS et l'étape de transmission TRANS :
. une étape de concaténation CONCS des mots binaires BWi en une chaîne de valeurs binaires BVC, et
. une étape de mise en forme FRMS de ladite chaîne BVC en une chaîne d'octets FBVC contenant les données binaires à transmettre

Les étapes de concaténation et de mise en forme CONCS et FRMS permettent de transformer la chaîne des sextets BWi (pour i=1 à 9) en une chaîne d'octets FBVC qui est alors transmissible au moyen d'un dispositif émetteur conforme à la norme GSM 03.38, ce qui permet d'utiliser un matériel préexistant et largement répandu pour mettre en oeuvre le procédé de transmission selon l'invention.

L'étape de mise en forme FRMS prévoit d'adjoindre au dernier bit de la chaîne de valeurs binaires BVC un mot de remplissage PAD contenant un certain nombre de bits ayant dans cet exemple une valeur logique prédéterminée "0". La valeur de ce nombre de bits est égale à la différence entre un multiple de 8, ici le nombre 56, immédiatement supérieur au nombre total de bits présents dans la chaîne de valeurs binaires BVC, ici le nombre 54, et ledit nombre total de bits. Dans cet exemple, le mot de remplissage PAD contient donc deux bits ayant la valeur logique "0". Ce mot de remplissage PAD sera ignoré par un dispositif récepteur de la chaîne d'octets FBVC ainsi obtenue.

Dans le mode de mise en oeuvre particulier décrit ici, l'étape de traduction TRS met en oeuvre une seule table alphabétique prédéterminée identifiable au moyen d'une valeur codée (CVAL1;CVAL0). Le procédé inclut en outre, insérées avant l'étape de transmission TRS :
. une étape de création CRS, au sein des données binaires TBD à transmettre, d'au moins un champ d'identification de table IDATB, et
. une étape d'inscription INSCRS, dans ledit champ d'identification de table IDATB, de ladite valeur codée (CVAL1;CVAL0).

Les étapes de création CRS et d'inscription INSCRS apparaissent simultanément sur le présent diagramme afin de ne pas compliquer inutilement l'exposé.

Ainsi qu'expliqué plus haut, une étape de traduction TRS conforme à l'invention sera exécutée en référence à une table qui n'est pas normalisée, puisque les caractères sont destinés à être traduits en mots binaires ayant une taille différente de celle prévue dans la norme GSM 03.38. Le champ d'identification de table IDATB permet donc de communiquer à un dispositif récepteur des données binaires TBD un identifiant de la table à utiliser pour opérer une traduction inverse desdites données binaires en caractères intelligibles pour un utilisateur du dispositif récepteur.

Ce champ d'identification de table IDATB pourra par exemple être créé au sein d'un en-tête spécifique au message formé par les données binaires et disposé en amont de celles-ci. Le champ d'identification de table IDATB comporte dans cet exemple deux octets destinés à recevoir deux valeurs CVAL1 et CVAL0 codées sur 8 bits chacune, permettant alors de définir jusqu'à 2⁸x2⁸=65536 tables alphabétiques différentes, ce qui est énorme. On pourra par conséquent choisir de n'utiliser pour former les valeurs codées CVAL1 et CVAL0 que des caractères alphanumériques, qui offrent pour chaque octet 36 possibilités formées par 26 lettres et 10 chiffres, ce qui permettra à un couple de telles valeurs codées de définir sans ambiguïté 36²=1296 tables alphabétiques différentes. D'une manière plus générale, on pourra utiliser pour former les valeurs codées CVAL1 et CVAL0, au lieu des 26 lettres et 10 chiffres évoqués ci-dessus, des caractères de nature alphanumérique, des signes de ponctuation ou mathématiques quelconques, mis à disposition d'un utilisateur du procédé au moyen par exemple d'un clavier de saisie de caractères.

Un dispositif récepteur de la chaîne de données binaire TBD effectuera une lecture de l'en-tête contenant le champ d'identification de table IDATB et en déduira l'identité de la table alphabétique à utiliser pour effectuer une traduction inverse desdites données binaires, et, en particulier, connaîtra ainsi le nombre de bits présents dans chaque mot binaire BWi (pour i=1 à 9) définissant un caractère, ce qui permettra d'identifier comme tel le mot de remplissage PAD et de l'ignorer lors de l'exécution de la traduction inverse.

Il est néanmoins tout à fait envisageable d'utiliser, dans d'autres modes de mise en oeuvre de l'invention, des tables alphabétiques différentes pour traduire différents caractères, auquel cas chaque mot binaire résultant d'une telle traduction sera avantageusement accompagné d'un identifiant de table contenant une valeur codée associée à la table alphabétique qui aura été utilisée pour obtenir ce mot binaire.

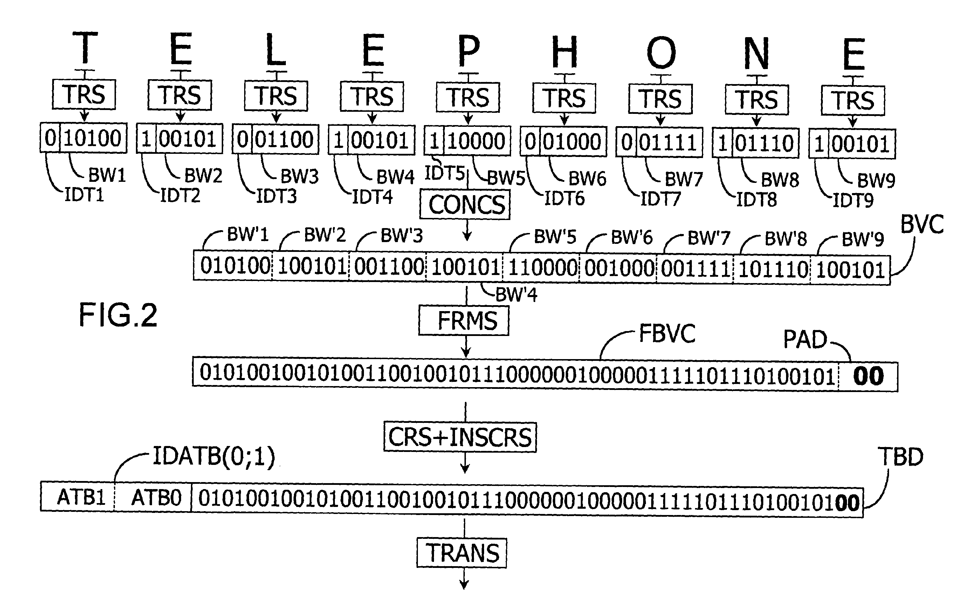

La Fig.2 illustre un tel autre mode de mise en oeuvre de l'invention. Dans la mesure du possible, une cohérence avec l'exposé qui précède a été recherchée, et des éléments ou des étapes du procédé de transmission sus-décrit ne seront pas à nouveau décrits dans la suite de l'exposé.

Dans cet autre mode de mise en oeuvre de l'invention, l'étape de traduction TRS met en oeuvre deux tables alphabétiques prédéterminées contenant chacune trente-deux caractères, chaque table étant identifiée au moyen d'une valeur "0" ou "1" codée sur un bit destinée à être inscrite dans un identifiant de table IDTi (pour i=1 à 9) adjoint à un quintet formant un mot binaire BWi résultant de la traduction d'un caractère en référence à la table considérée.

Au cours de l'étape de concaténation CONCS, chaque valeur codée "0" ou "1" d'un identifiant de table IDTi est accolée aux valeurs binaires incluses dans le quintet BWi auquel ledit identifiant est adjoint, de manière à former en quelque sorte une chaîne de sextets BW'i (pour i=1 à 9).

L'étape de mise en forme FRMS pourra être exécutée selon la description précédente.

Au cours de l'étape de création CRS, un champ d'identification de table IDATB(0;1) est créé en amont des données binaires à transmettre. Ce champ d'identification de table IDATB est destiné à recevoir deux valeurs ATB1 et ATB0, codées chacune sur 8 bits et permettant d'identifier chacune des deux tables utilisées pour exécuter l'étape de traduction, une valeur "0" contenue dans un identifiant de table IDTi (pour i=1 à 9) signifiant que le mot binaire associé BWi a été traduit au moyen de la table identifiée par la valeur codée ATB0, une valeur "1" contenue dans un identifiant de table IDTi (pour i=1 à 9) signifiant que le mot binaire associé BWi a été traduit au moyen de la table identifiée par la valeur codée ATB 1. Ainsi, dans le présent exemple, les caractères "T", "L", "H", et "O" ont été traduits en référence à la table identifiée par la valeur codée ATB0, tandis que les caractères "E", "P", et "N" ont été traduits en référence à la table identifiée par la valeur codée ATB1.

Chaque identifiant de table IDTi permet donc d'indiquer à un dispositif récepteur des données binaires TBD une identité de la table à utiliser pour opérer une traduction inverse de chaque quintet BWi en un caractère intelligible pour un utilisateur du dispositif récepteur.

Dans une variante de ce mode de mise en oeuvre de l'invention, variante qui n'a pas été représentée ici, on pourra choisir d'inhiber une adjonction d'un identifiant de table à un mot binaire donné si ledit mot binaire donné a été traduit en référence à la même table alphabétique que celle en référence à laquelle la traduction dont résulte un mot binaire précédent ledit mot binaire donné a été exécutée.

Une telle variante permettra de réduire la longueur de la chaîne de valeurs binaires BVC. Dans les circonstances représentées sur la présente figure, la mise en oeuvre d'une telle variante provoquera en effet une inhibition de l'adjonction aux mots binaires BW5, BW7 et BW9 des identifiants IDT5, IDT7 et IDT9.

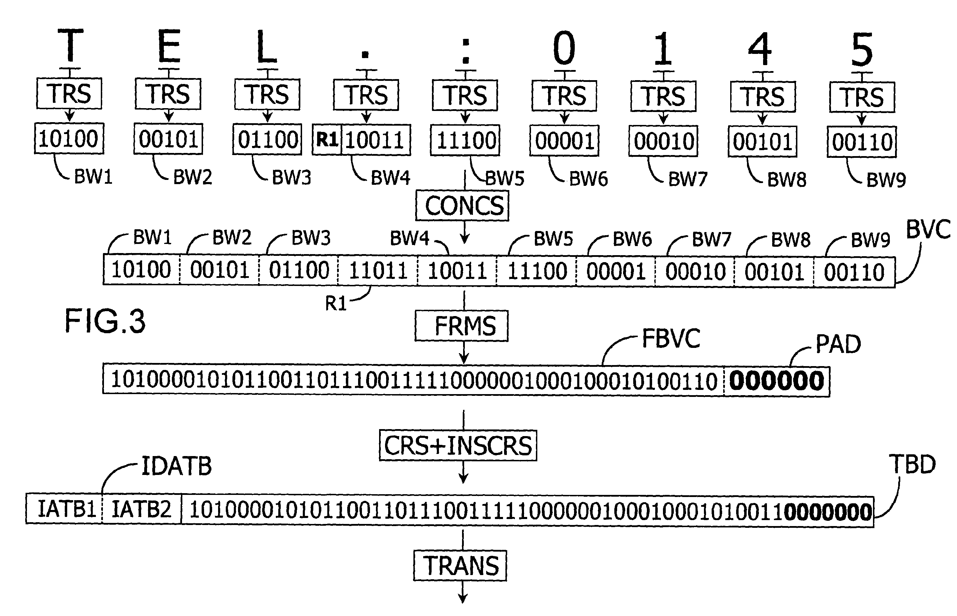

La Fig.3 illustre un autre mode de mise en oeuvre de l'invention. Dans la mesure du possible, une cohérence avec l'exposé qui précède a été recherchée, et des éléments ou des étapes du procédé de transmission sus-décrit ne seront pas à nouveau décrits dans la suite de l'exposé.

Dans l'exemple décrit ici, le message à transmettre est composé ici à la fois de lettres et de chiffres et forme une chaîne de caractères "TEL.:0145", qui pourra être utilisée pour communiquer un numéro de téléphone.

Dans cet autre mode de mise en oeuvre de l'invention, l'étape de traduction TRS met en oeuvre des première et deuxième tables alphabétiques ATB1 et ATB2 prédéterminées contenant chacune trente-deux caractères, chaque table étant identifiable au moyen d'une valeur IATB1 ou IATB2 codées chacune sur un octet et destinées à être inscrites dans un champ d'identification de table IDATB.

Au cours de l'étape de traduction TRS, chaque caractère de la chaîne de caractères "TEL.:0145" est traduit en un quintet issu de l'une des tables alphabétiques ATB1 ou ATB2.

Au cours de l'étape de concaténation CONCS, les quintets résultant de l'étape de traduction sont accolés les uns aux autres, le quintet "11011" constituant la traduction d'un caractère dit de renvoi R1 étant inséré entre le quintet formant le mot binaire BW3 et le quintet formant le mot binaire BW4.

L'étape de mise en forme FRMS pourra être exécutée selon la description précédente, à ceci près que la chaîne de valeurs binaires BVC résultant de l'étape de concaténation CONCS comprend ici 50 caractères, de sorte que le mot de remplissage PAD devra donc contenir six bits ayant la valeur logique "0".

Chacune des première et deuxième tables alphabétiques ATB1 et ATB2 comprend un caractère dit de renvoi, respectivement R1 et R2, qui, lorsqu'il sera disposé devant un quintet formant un mot binaire résultant de la traduction d'un caractère donné, signifiera qu'au moins ledit caractère aura été traduit en référence à une table alphabétique différente de celle qui aura été utilisée pour traduire un caractère précédent ledit caractère donné.

En l'occurrence, la première table alphabétique ATB1 ne contient que des lettres et certains signes de ponctuation, et la deuxième table alphabétique ATB2 ne contient que des chiffres et des symboles mathématiques. Grâce à une telle répartition judicieuse des caractères dans les première et deuxième tables alphabétiques ATB1 et ATB2, seule la première table alphabétique ATB1 devra être utilisée pour traduire une première partie "TEL" de la chaîne de caractères "TEL.:0145", tandis que seule la deuxième table alphabétique ATB2 devra être utilisée pour traduire une deuxième partie ".:0145" de ladite chaîne de caractères "TEL.:0145". Lorsque, au cours de l'étape de traduction TRS, une traduction d'un caractère "." nécessitera un passage de la première table alphabétique ATB1 à la deuxième table alphabétique ATB2, un tel passage sera indiqué par une insertion, devant le quintet résultant de la traduction du caractère ".", d'un quintet représentant un premier caractère de renvoi R1 inclus dans la première table alphabétique ATB1. Tous les caractères suivants qui pourront l'être seront alors traduits en référence à la deuxième table alphabétique ATB2, jusqu'à ce qu'apparaisse un caractère non-contenu dans ladite deuxième table alphabétique ATB2, auquel cas un deuxième caractère de renvoi R2 non-représenté sur la présente figure sera utilisé pour signifier un retour à la première table alphabétique ATB1 pour la traduction dudit caractère non-contenu dans la deuxième table alphabétique ATB2.

On observe ainsi que, dans ce cas particulier où la chaîne "TEL.:0145" inclut neuf caractères, sa traduction selon ce mode de mise en oeuvre particulier de l'invention requiert en tout dix quintets, soit 50 bits, alors que 63 bits auraient été nécessaires pour une traduction de la même chaîne en septets selon un procédé connu. Ce mode de mise en oeuvre de l'invention permet donc de réduire de 20% le nombre de bits nécessaires à la traduction du message faisant l'objet de cet exemple.

Dans le cas d'une chaîne de caractères intégrant une succession de dix chiffres, conformément à un format actuellement utilisé pour coder des numéros de téléphone en France, comme par exemple une chaîne de caractères "TEL.:0145294444", seulement seize quintets, c'est-à-dire 80 bits, seraient utilisés pour former la chaîne de valeurs binaires BVC selon le procédé décrit ci-dessus, alors qu'au moins quinze septets, c'est-à-dire 105 bits, devraient être utilisés à cette fin selon un procédé connu. Dans un tel cas, le procédé selon ce mode de mise en oeuvre particulier de l'invention permettra donc de réduire la longueur de la chaîne de valeurs binaires BVC de 24% par rapport à la longueur de la chaîne de valeurs binaires qui aurait été générée par le procédé connu.

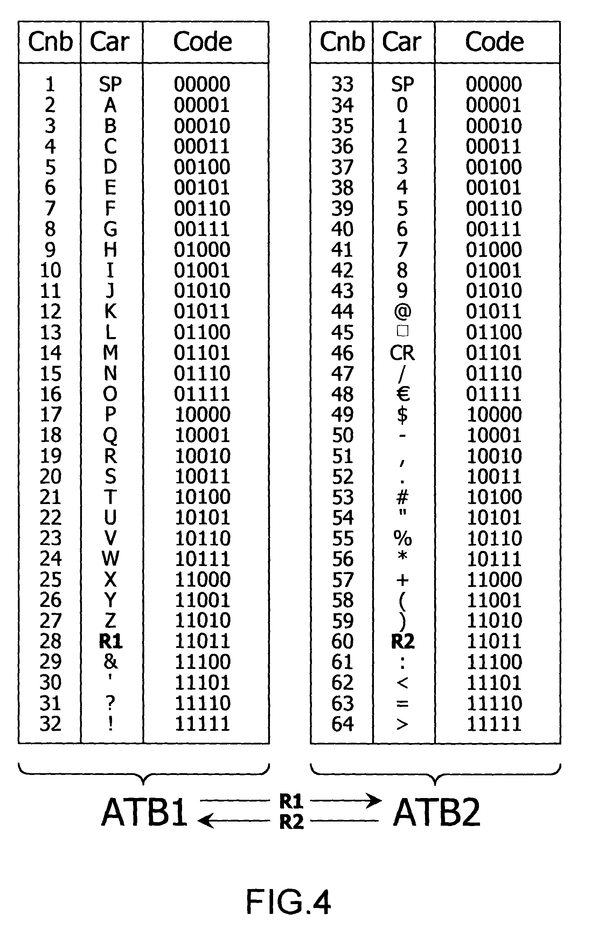

La Fig.4 représente deux tables alphabétiques ATB1 et ATPB2 dans lesquelles des caractères auront été judicieusement répartis pour exploiter de manière avantageuse le procédé décrit ci-dessus. La première table alphabétique ATB1 ne contient que des lettres et certains signes de ponctuation, et la deuxième table alphabétique ATB2 ne contient que des chiffres et des symboles mathématiques. Grâce à une telle répartition judicieuse des caractères dans les première et deuxième tables alphabétiques ATB1 et ATB2, seule la première table alphabétique ATB1 devra être utilisée pour traduire une première partie "TEL" de la chaîne de caractères "TEL.:0145", tandis que seule la deuxième table alphabétique ATB2 devra être utilisée pour traduire une deuxième partie ".:0145" de ladite chaîne de caractères "TEL.:0145". Un passage de l'une à l'autre des première et deuxième tables alphabétiques ATB1 et ATB2 sera déclenché par une insertion, devant le caractère devant être traduit au moyen de l'autre table, d'un caractère de renvoi R1 ou R2 matérialisé dans cet exemple par un quintet "11011" commun aux deux tables. Un tel mode de mise en oeuvre est avantageux en ce qu'il permet de coder chaque mot binaire résultant de l'exécution de l'étape de traduction sur cinq bits seulement, tout en offrant 62 significations possibles de chacun de ces quintets au lieu de 2⁵=32, les caractères de renvoi R1 et R2 portant un numéro de caractère Cnb égal à 28 ou à 60 n'étant pas utilisables à des fins de traduction.

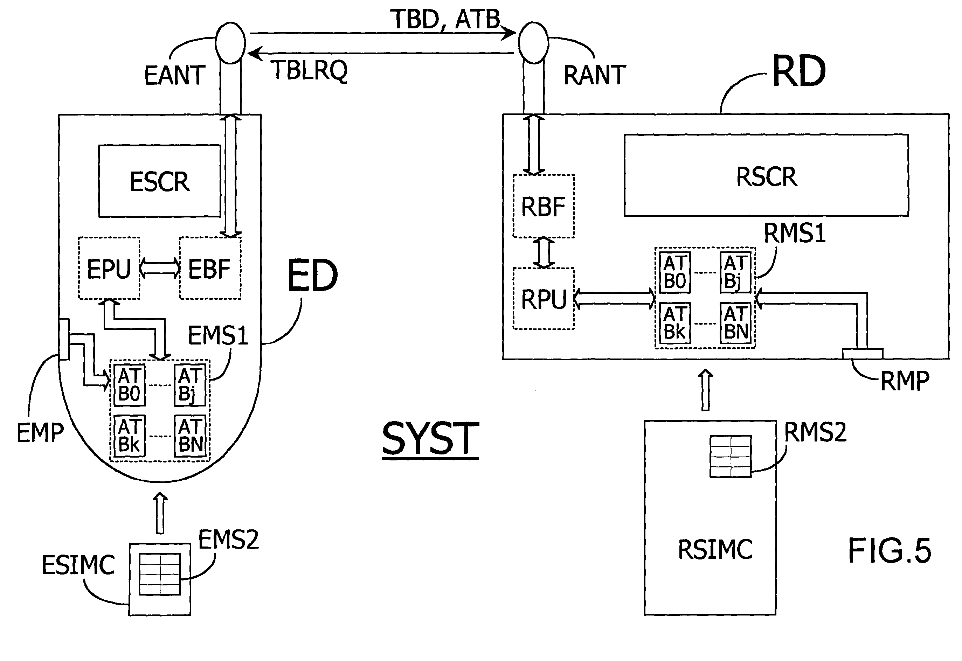

La Fig.5 représente très schématiquement un système de télécommunication SYST dans lequel l'invention est mise en oeuvre. Ce système SYST inclut un dispositif émetteur ED de données TBD destinées à former une chaîne de caractères et un dispositif récepteur RD de telles données TBD. Dans l'exemple décrit ici, le dispositif émetteur est un radiotéléphone muni d'un écran ESCR apte à afficher des chaînes de caractères et le dispositif récepteur RD est un organiseur également muni d'un écran RSCR apte à afficher des chaînes de caractères. Les dispositifs émetteur et récepteur ED et RD sont munis de moyens de transmission de données binaires respectivement matérialisés par des antennes EANT et RANT aptes à la fois à émettre et à recevoir des signaux radioélectriques, de sorte que les rôles des dispositifs émetteur et récepteur ED et RD pourront être inversés dans d'autres configurations.

Le dispositif émetteur ED inclut ici :
. des moyens de traduction desdits caractères en données binaires incluant des mots binaires de moins de sept bits,
. des moyens de concaténation desdits mots binaires en une chaîne de valeurs binaires, et
. des moyens de mise en forme de ladite chaîne en une chaîne d'octets contenant les données binaires à transmettre.

Ces moyens de traduction, de concaténation et de mise en forme sont rassemblés au sein d'une unité de traitement EPU incluse dans le dispositif émetteur ED.

Cette unité de traitement EPU contient également :
. des moyens de création, au sein des données binaires à transmettre, d'au moins un champ d'identification de table, et
. des moyens d'inscription, dans ledit champ d'identification de table, d'au moins une valeur codée associée à au moins une table alphabétique en référence à laquelle l'étape de traduction a été exécutée.

L'unité de traitement EPU génère ainsi, sur la base de la chaîne de caractères définie par un utilisateur du dispositif émetteur ED et conformément à un procédé conforme à la description qui précède, une chaîne de données binaires TBD à transmettre au dispositif récepteur RD que ledit utilisateur aura sélectionné.

A cette fin, l'unité de traitement EPU coopère avec un premier support mémoire EMS1 inclus dans ledit dispositif émetteur ED, ou avec un deuxième support mémoire EMS2 amovible par rapport audit dispositif émetteur ED. Dans l'exemple décrit ici, ce deuxième support mémoire EMS2 amovible par rapport au dispositif émetteur ED est solidaire d'une carte à puce ESIMC de type Micro-Sim.

Le premier support mémoire EMS1 du dispositif émetteur ED est destiné à contenir une bibliothèque de N+1 tables alphabétiques ATB0,...ATBj,...ATBk,...ATBN, lesquelles tables pourront avoir été préchargées par un constructeur du dispositif émetteur ED, mais pourront aussi avoir été créées et préchargées par un utilisateur dudit dispositif émetteur ED via un port mémoire EMP.

Le deuxième support mémoire EMS2 du dispositif émetteur ED pourra contenir une autre bibliothèque de tables alphabétiques, lesquelles tables pourront avoir été préchargées par un opérateur du système de télécommunication SYST auprès duquel un utilisateur dudit dispositif émetteur ED aura contracté un abonnement à un service d'échanges de courts messages écrits, mais aussi éventuellement par l'utilisateur lui-même.

D'autres modes de chargement des tables alphabétiques sont, bien sûr, parfaitement envisageables, comme par exemple un téléchargement de telles tables par un opérateur du système de télécommunication SYST dans le premier support mémoire EMS1 ou dans le deuxième support mémoire EMS2, via, dans ce dernier cas, un port liant ledit deuxième support mémoire EMS2 au dispositif émetteur ED.

Après avoir généré une chaîne de données binaires TBD, l'unité de traitement EPU du dispositif récepteur ED inscrira ladite chaîne dans une mémoire tampon EBF et ordonnera son envoi au moyen de l'antenne EANT du dispositif émetteur ED.

Le dispositif récepteur RD recevra cette chaîne de données binaires TBD au moyen de son antenne RANT et la transmettra à une unité de traitement RPU incluse dans le dispositif récepteur RD via une mémoire tampon RBF. Cette unité de traitement RPU du dispositif récepteur RD et l'unité de traitement EPU du dispositif récepteur ED seront de préférence munies de fonctionnalités identiques de manière à autoriser des échanges bidirectionnels de données. L'unité de traitement RPU incluse dans le dispositif récepteur RD est ainsi apte à exécuter, entre autres :
. une étape de lecture d'un en-tête de la chaîne de données binaires TBD, et en particulier d'une ou plusieurs valeurs codées incluses dans le champ d'identification de table alphabétique,
. une étape de décomposition de ladite chaîne de données binaires destinée à en extraire les mots binaires d'origine dans lesquels ont été traduits les caractères véhiculées par la chaîne de données binaires TBD, et
. une étape de traduction inverse desdits mots binaires en caractères intelligibles pour un utilisateur du dispositif de réception RD, en référence à une ou plusieurs tables alphabétiques identifiées lors de l'exécution de l'étape de lecture du champ d'identification.

A cette fin, l'unité de traitement RPU du dispositif récepteur RD coopère avec un premier support mémoire RMS1 inclus dans ledit dispositif récepteur RD, ou avec un deuxième support mémoire RMS2 amovible par rapport audit dispositif récepteur RD. Dans l'exemple décrit ici, ce deuxième support mémoire RMS2 amovible par rapport au dispositif récepteur RD est solidaire d'une carte à puce RSIMC de type Sim.

Le premier support mémoire RMS1 du dispositif récepteur RD est destiné à contenir une bibliothèque de N+1 tables alphabétiques ATB0,...ATBj,...ATBk,...ATBN, lesquelles tables pourront avoir été préchargées par un constructeur du dispositif récepteur RD, mais pourront aussi avoir été créées et préchargées par un utilisateur dudit dispositif récepteur RD via un port mémoire RMP.

Le deuxième support mémoire RMS2 du dispositif récepteur RD pourra contenir une autre bibliothèque de tables alphabétiques, lesquelles tables pourront avoir été préchargées par un opérateur du système de télécommunication SYST auprès duquel un utilisateur dudit dispositif récepteur RD aura contracté un abonnement à un service d'échanges de courts messages écrits, mais aussi éventuellement par l'utilisateur lui-même.

D'autres modes de chargement des tables alphabétiques sont, bien sûr, parfaitement envisageables, comme par exemple un téléchargement de telles tables par un opérateur du système de télécommunication SYST dans le premier support mémoire RMS1 ou dans le deuxième support mémoire RMS2, via, dans ce dernier cas, un port liant ledit deuxième support mémoire RMS2 au dispositif émetteur ED.

Le dispositif récepteur RD est ici muni de moyens de détection d'absence d'une table alphabétique du support mémoire, et de moyens d'émission vers le dispositif émetteur ED d'une requête TBLRQ de transmission d'une table dont l'absence aura été détectée par les moyens de détection.

Les moyens de détection sont intégrés dans l'unité de traitement RPU du dispositif récepteur RD. Ces moyens de détection permettront au dispositif récepteur RD, lorsqu'il ne reconnaîtra pas après lecture de sa valeur codée associée, une table alphabétique TBL nécessaire à la traduction de données binaires TBD, de requérir auprès du dispositif émetteur ED desdites données TBD une transmission du contenu de ladite table. Ceci pourra notamment se produire si la table alphabétique utilisée pour la traduction par le dispositif émetteur ED est une table qui a été créée de toutes pièces par un utilisateur dudit dispositif émetteur ED.

Une telle fonctionnalité permettra d'assurer à l'auteur d'un message traduit au moyen d'une ou plusieurs tables alphabétiques propres à cet auteur que ce message puisse être lu par son destinataire, sans pour autant entraîner une trop grande dissémination du contenu de telles tables, puisqu'elles ne seront divulguées que de manière sélective et sur requête du destinataire, ce qui confère une plus grande confidentialité et un plus haut degré de personnalisation aux données transmises au moyen d'un procédé conforme à l'invention.

Il est en outre à noter que, les dispositifs émetteur et récepteur ED et RD étant munis d'éléments semblables d'un dispositif à l'autre, leurs rôles pourront se trouver inversés dans d'autres cas de figure non-représentés ici.

Les dispositifs émetteur et récepteur ED et RD pourront en outre être munis de moyens de transformation des tables alphabétiques ATB0, ... ATBj, ... ATBk,... ATBN, lesquels moyens pourront être constitués par un logiciel exécutable par les unités de traitement EPU et RPU, respectivement. Un tel logiciel pourra par exemple proposer à un utilisateur du dispositif émetteur ou récepteur ED et RD, via l'écran ESCR ou RSCR, de composer sur un clavier non-représenté sur la présente figure un numéro "i" d'une table alphabétique ATBi à transformer, puis de composer trois valeurs de transformation a, b et c. Les moyens de transformation pourront alors faire correspondre à toute Lème lettre de la table alphabétique ATBi la (L+a)ème lettre avec un modulo 26, à tout Mème chiffre de la table alphabétique ATBi le (M+b)ème chiffre avec un modulo 10, et à tout Pème caractère spécial de la table alphabétique ATBi le (P+c)ème caractère spécial avec un modulo égal au nombre total de caractères spéciaux contenus dans la table alphabétique ATBi. L'utilisateur du dispositif émetteur ED qui aura choisi d'opérer une telle transformation de la table alphabétique ATBi devra faire parvenir par un moyen quelconque, qui sera de préférence indépendant du message contenant les données TBD, les trois valeurs a, b et c à l'utilisateur du dispositif récepteur RD afin que celui-ci puisse, lui aussi, opérer une transformation de la table alphabétique ATBi contenue dans le dispositif récepteur RD, sans quoi ledit dispositif récepteur RD ne pourra restituer sous leur forme d'origine les caractères représentés par les données TRD.

D'autres méthodes pourront, bien sûr, être utilisées pour réaliser la transformation d'une table alphabétique donnée. Il est par exemple envisageable d'utiliser une clé selon laquelle un Lème caractère d'une table alphabétique donnée sera destiné à devenir le Pème caractère d'une table alphabétique résultant de la transformation de ladite table alphabétique donnée.

L'invention peut ainsi permettre à des utilisateurs de dispositifs émetteur et récepteur ED et RD d'échanger des données dont la confidentialité est renforcée au moyen d'un cryptage qui, bien que rudimentaire, sera généralement suffisant pour interdire un accès auxdites données à un public non-spécialisé en cryptologie.

Bien que l'application de l'invention décrite dans l'exposé qui précède s'inscrive dans le domaine des échanges de courts messages écrits, il doit être bien compris qu'un procédé et un système de transmission de données selon l'invention pourront être avantageusement utilisés pour transmettre des données conformes à d'autres formats, comme des fichiers générés par des messageries électroniques, des fichiers générés par des logiciels de traitement de texte, par des tableurs ou par des logiciels de traitement de son ou d'image, ainsi que des fichiers générés par des bases de données, la liste qui précède n'étant pas exhaustive.

## Revendications

1. Procédé de transmission de données destinées à former une chaîne de caractères, incluant :
. une étape de traduction desdits caractères en données binaires incluant des mots binaires représentatifs chacun d'un caractère, et
. une étape de transmission desdites données binaires,
procédé **caractérisé en ce que**, l'étape de traduction mettant en oeuvre au moins une table alphabétique prédéterminée identifiable au moyen d'au moins une valeur codée, ledit procédé inclut en outre, insérées entre l'étape de traduction et l'étape de transmission :
. une étape de création, au sein des données binaires à transmettre, d'au moins un champ d'identification de table, et
. une étape d'inscription, dans ledit champ d'identification de table, de ladite valeur codée.

2. Procédé de transmission de données selon la revendication 1, **caractérisé en ce qu'**il inclut en outre, insérées avant l'étape de transmission :
. une étape de concaténation desdits mots binaires en une chaîne de valeurs binaires, et
. une étape de mise en forme de ladite chaîne en une chaîne d'octets contenant les données binaires à transmettre.

3. Procédé de transmission de données selon l'une des revendications 1 ou 2, **caractérisé en ce qu'**il inclut en outre une étape d'adjonction d'un identifiant de table à chaque mot binaire, chaque identifiant de table étant destiné à contenir une valeur codée identifiant une table alphabétique en référence à laquelle la traduction dont résulte ledit mot binaire a été exécutée.

4. Procédé de transmission de données selon la revendication 3, **caractérisé en ce qu'**une exécution de l'étape d'adjonction est destinée à être inhibée lorsqu'un mot binaire donné auquel l'identifiant de table doit être adjoint a été traduit en référence à la même table alphabétique que celle en référence à laquelle la traduction dont résulte un mot binaire précédent ledit mot binaire donné a été exécutée.

5. Procédé de transmission de données selon l'une des revendications 1 ou 2, **caractérisé en ce que** l'étape de traduction met en oeuvre au moins deux tables alphabétiques prédéterminées, chaque table comprenant au moins un caractère dit de renvoi qui, lorsqu'il sera disposé devant un mot binaire résultant de la traduction d'un caractère donné, signifiera qu'au moins ledit caractère aura été traduit en référence à une table alphabétique différente de celle qui aura été utilisée pour traduire un caractère précédent ledit caractère donné.

6. Procédé de transmission de données selon l'une des revendications 1 ou 2, **caractérisé en ce que** les mots binaires sont des quintets, et **en ce que** chaque table alphabétique est destinée à contenir trente-deux caractères.

7. Procédé de transmission de données selon l'une des revendications 1 à 6, **caractérisé en ce qu'**il inclut en outre, insérée avant l'étape de traduction des caractères en données binaires, une étape de transformation d'au moins une table alphabétique destinée à être mise en oeuvre lors de l'exécution de l'étape de traduction.

8. Système de télécommunication incluant au moins un dispositif émetteur de données destinées à former une chaîne de caractères et au moins un dispositif récepteur de telles données, le dispositif émetteur incluant :
. des moyens de traduction desdits caractères en données binaires incluant des mots binaires représentatifs chacun d'un caractère, et
. des moyens de transmission desdites données binaires,
système **caractérisé en ce que**, les moyens de traduction mettant en oeuvre au moins une table alphabétique prédéterminée identifiable au moyen d'au moins une valeur codée, ledit dispositif émetteur inclut en outre :
. des moyens de création, au sein des données binaires à transmettre, d'au moins un champ d'identification de table, et
. des moyens d'inscription, dans ledit champ d'identification de table, de ladite valeur codée.

9. Système de télécommunication selon la revendication 8, **caractérisé en ce que** le dispositif émetteur inclut en outre :
. des moyens de concaténation desdits mots binaires en une chaîne de valeurs binaires, et
. des moyens de mise en forme de ladite chaîne en une chaîne d'octets contenant les données binaires à transmettre.

10. Système de télécommunication selon l'une des revendications 8 ou 9, **caractérisé en ce qu'**il inclut en outre des moyens d'adjonction d'un identifiant de table à chaque mot binaire, chaque identifiant de table étant destiné à contenir une valeur codée identifiant une table alphabétique en référence à laquelle la traduction dont résulte ledit mot binaire a été exécutée.

11. Système de télécommunication selon la revendication 10, **caractérisé en ce que** les moyens d'adjonction sont destinés à être inhibés lorsqu'un mot binaire donné auquel l'identifiant de table doit être adjoint a été traduit en référence à la même table alphabétique que celle en référence à laquelle la traduction dont résulte un mot binaire précédent ledit mot binaire donné a été exécutée.

12. Système de télécommunication selon l'une des revendications 8 ou 9, **caractérisé en ce que** les moyens de traduction mettent en oeuvre au moins deux tables alphabétiques, préalablement mémorisées sur un support mémoire accessible par le dispositif émetteur, chaque table comprenant au moins un caractère dit de renvoi qui, lorsqu'il sera disposé devant un mot binaire résultant de la traduction d'un caractère donné, signifiera qu'au moins ledit caractère aura été traduit en référence à une table alphabétique différente de celle qui aura été utilisée pour traduire un caractère précédent ledit caractère donné.

13. Système de télécommunication selon la revendication 12, **caractérisé en ce que** les mots binaires sont des quintets, et **en ce que** chaque table alphabétique est destinée à contenir trente-deux caractères.

14. Système de télécommunication selon l'une des revendications 8 à 13, **caractérisé en ce qu'**il inclut en outre des moyens de transformation d'au moins une table alphabétique destinée à être mise en oeuvre lors de l'exécution de l'étape de traduction.

15. Système de télécommunication selon l'une des revendications 8 à 14, **caractérisé en ce que**, le dispositif récepteur étant muni de moyens d'identification d'une table alphabétique prédéterminée identifiable au moyen d'une valeur codée et d'un support mémoire accessible par ledit dispositif récepteur et destiné à contenir ladite table, ledit dispositif récepteur incluant en outre :
. des moyens de détection d'absence de ladite table du support mémoire, et
. des moyens d'émission vers le dispositif émetteur d'une requête de transmission d'une table dont l'absence aura été détectée par les moyens de détection.

16. Dispositif émetteur inclus dans un système de télécommunication conforme à l'une des revendications 8 à 15.

17. Dispositif récepteur inclus dans un système de télécommunication conforme à l'une des revendications 8 à 15.
